(19) Europäisches Patentamt / European Patent Office / Office européen des brevets

(11) **EP 4 635 812 A1**

(12) **EUROPEAN PATENT APPLICATION**
published in accordance with Art. 153(4) EPC

(43) Date of publication:
**22.10.2025 Bulletin 2025/43**

(21) Application number: **24915841.1**

(22) Date of filing: **05.02.2024**

(51) International Patent Classification (IPC):
**B60W 20/13** (2016.01)    **B60W 10/06** (2006.01)
**B60W 10/08** (2006.01)    **B60W 10/26** (2006.01)

(86) International application number:
**PCT/CN2024/075923**

(87) International publication number:
**WO 2025/161043 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2024  CN 202410137187**

(71) Applicant: **Chongqing Changan Automobile Co., Ltd.**
**Chongqing 400023 (CN)**

(72) Inventors:
• **ZHANG, Yousheng**
  **Chongqing 400023 (CN)**
• **ZHAO, Junfu**
  **Chongqing 400023 (CN)**

(74) Representative: **Keller Schneider Patent- und Markenanwälte AG**
**Eigerstrasse 2**
**Postfach**
**3000 Bern 14 (CH)**

(54) **HYBRID VEHICLE CONTROL METHOD AND APPARATUS, DEVICE, HYBRID VEHICLE, AND STORAGE MEDIUM**

(57)    The present application relates to the technical field of vehicle control and discloses a controlling method, apparatus, device of a hybrid vehicle, a hybrid vehicle and a storage medium. The method includes: determining an actual SOC value of a power battery when being in an overcharge prevention mode; determining a first target power corresponding to the actual SOC value, wherein a positive correlation exists between the actual SOC value and the first target power, and the first target power does not exceed a maximum charging and discharging power of the power battery; determining an actual power currently required by the hybrid vehicle and determining a second target power according to the actual power and the first target power, wherein the second target power is derived by subtracting the first target power from the actual power; and setting an output power of a power component of the hybrid vehicle to the second target power. The present application controls the hybrid vehicle by utilizing the second target power with the first target power removed, which can effectively prevent overcharging of the power battery.

```
┌──────────────────────────────────────────────────┐
│ Determine an actual SOC value of a power battery   │  S101
│ when being in an overcharge prevention mode        │
└──────────────────────────────────────────────────┘
                        │
┌──────────────────────────────────────────────────┐
│ Determine a first target power corresponding to    │  S102
│ the actual SOC value                               │
└──────────────────────────────────────────────────┘
                        │
┌──────────────────────────────────────────────────┐
│ Determine an actual power currently required by a  │  S103
│ hybrid vehicle and determine a second target power │
│ according to the actual power and the first target │
│ power                                              │
└──────────────────────────────────────────────────┘
                        │
┌──────────────────────────────────────────────────┐
│ Set an output power of a power component of the    │  S104
│ hybrid vehicle to the second target power          │
└──────────────────────────────────────────────────┘
```

FIG. 1

## Description

### TECHNICAL FIELD

The present application relates to the technical field of vehicle control, in particular to a controlling method, apparatus, device of a hybrid vehicle, a hybrid vehicle and a storage medium.

### BACKGROUND

A hybrid vehicle, also known as a hybrid electric vehicle, generally includes an engine and a generator. Under operating conditions such as energy recovery, the generator generates a large torque, which in turn generates a large charging current to a power battery, posing a risk of overcharging of the power battery.

### SUMMARY OF THE INVENTION

In view of this, the present application provides a controlling method, apparatus, device of a hybrid vehicle, a hybrid vehicle, and a storage medium, so as to solve a problem that a power battery tends to be overcharged.

In a first aspect, the present application provides a method for controlling a hybrid vehicle, including:

determining an actual state of charge (SOC) value of a power battery when being in an overcharge prevention mode;
determining a first target power corresponding to the actual SOC value, wherein a positive correlation exists between the actual SOC value and the first target power, and the first target power does not exceed a maximum charging and discharging power of the power battery;
determining an actual power currently required by the hybrid vehicle, and determining a second target power according to the actual power and the first target power, wherein the second target power is derived by subtracting the first target power from the actual power; and
setting an output power of a power component of the hybrid vehicle to the second target power.

In some possible implementations, when the actual SOC value is greater than a first SOC threshold, the first target power is a positive value; and when the actual SOC value is less than a second SOC threshold, the first target power is a negative value, wherein the first SOC threshold is greater than or equal to the second SOC threshold.

In some possible implementations, setting the output power of the power component of the hybrid vehicle to the second target power includes: determining a target rotational speed and a target torque corresponding to the second target power; controlling an engine of the hybrid vehicle to operate in a rotational speed control mode, and adjusting a rotational speed of the engine by using the target rotational speed as an adjustment target of the engine; and controlling a generator motor of the hybrid vehicle to operate in a torque control mode, and adjusting a torque of the generator motor by using the target torque as an adjustment target of the generator motor.

In some possible implementations, determining the target rotational speed and target torque corresponding to the second target power includes: determining an engine rotational speed corresponding to the second target power according to a preset correspondence between engine power and the engine rotational speed, and using the engine rotational speed corresponding to the second target power as the target rotational speed; and determining the target torque corresponding to the second target power, wherein the target torque satisfies that:

$$T_{target} = a * P_2 / n_{target};$$

wherein $T_{target}$ represents the target torque, $P_2$ represents the second target power, $n_{target}$ represents the target rotational speed, and a is a conversion coefficient.

In some possible implementations, determining the actual power currently required by the hybrid vehicle includes: determining actual power of a drive motor according to an actual rotational speed and an actual torque of the drive motor of the hybrid vehicle; determining actual power of a high-voltage accessory according to a voltage and current of the high-voltage accessory of the hybrid vehicle; and using a sum of the actual power of the drive motor and the actual power of the high-voltage accessory as the actual power currently required by the hybrid vehicle.

In some possible implementations, the method further includes: judging whether the actual power currently required by the hybrid vehicle meets a first overcharge prevention condition, and judging whether an actual state of the power battery meets a second overcharge prevention condition; and entering into the overcharge prevention mode when the actual power currently required by the hybrid vehicle meets the first overcharge prevention condition, and the actual state of the power battery meets the second overcharge prevention condition.

In some possible implementations, judging whether the actual power currently required by the hybrid vehicle meets the first overcharge prevention condition, and judging whether the actual state of the power battery meets the second overcharge prevention condition include: judging whether the actual power currently required by the hybrid vehicle is less than a first power threshold; determining that the actual power currently required by the hybrid vehicle meets the first overcharge prevention condition when the actual power currently required by the hybrid vehicle is less than the first power threshold; judging whether the actual SOC value of the power battery is greater than a third SOC threshold, and/or judging whether charging power of the power battery is less than a second power threshold; and determining that the actual state of the power battery meets the second overcharge prevention condition when the actual SOC value of the power battery is greater than the third SOC threshold and/or the charging power of the power battery is less than the second power threshold.

In some possible implementations, the method further includes: exiting the overcharge prevention mode if, while in the overcharge prevention mode, the actual power currently required by the hybrid vehicle does not meet the first overcharge prevention condition, or the actual state of the power battery does not meet the second overcharge prevention condition.

In a second aspect, the present application provides an apparatus for controlling a hybrid vehicle, including:

an SOC value determining module, configured to determine an actual SOC value of a power battery when being in an overcharge prevention mode;
a first power determining module, configured to determine a first target power corresponding to the actual SOC value, wherein a positive correlation exists between the actual SOC value and the first target power, and the first target power does not exceed a maximum charging and discharging power of the power battery;
a second power determining module, configured to determine an actual power currently required by the hybrid vehicle, and determine a second target power according to the actual power and the first target power, wherein the second target power is derived by subtracting the first target power from the actual power; and
a controlling module, configured to set an output power of a power component of the hybrid vehicle to the second target power.

In some possible implementations, when the actual SOC value is greater than a first SOC threshold, the first target power is a positive value; and when the actual SOC value is less than a second SOC threshold, the first target power is a negative value, wherein the first SOC threshold is greater than or equal to the second SOC threshold.

In some possible implementations, the controlling module includes: a determining unit, configured to determine a target rotational speed and a target torque corresponding to the second target power; a rotational speed controlling unit, configured to control an engine of the hybrid vehicle to operate in a rotational speed control mode, and adjust a rotational speed of the engine by using the target rotational speed as an adjustment target of the engine; and a torque controlling unit, configured to control a generator motor of the hybrid vehicle to operate in a torque control mode, and adjust a torque of the generator motor by using the target torque as an adjustment target of the generator motor.

In some possible implementations, the determining unit includes: a rotational speed determining subunit, configured to determine an engine rotational speed corresponding to the second target power according to a preset correspondence between an engine power and the engine rotational speed, and use the engine rotational speed corresponding to the second target power as the target rotational speed; and a torque determining subunit, configured to determine the target torque corresponding to the second target power, wherein the target torque satisfies that:

$$T_{target}=a*P_2/n_{target};$$

wherein $T_{target}$ represents the target torque, $P_2$ represents the second target power, $n_{target}$ represents the target rotational speed, and a is a conversion coefficient.

In some possible implementations, determining, by the second power determining module, the actual power currently required by the hybrid vehicle includes: determining an actual power of a drive motor according to an actual rotational speed and an actual torque of the drive motor of the hybrid vehicle; determining an actual power of a high-voltage accessory according to a voltage and a current of the high-voltage accessory of the hybrid vehicle; and using a sum of the actual power of the drive motor and the actual power of the high-voltage accessory as the actual power currently required by the hybrid vehicle.

In some possible implementations, the apparatus further includes: a mode controlling module, configured to: judge whether the actual power currently required by the hybrid vehicle meets a first overcharge prevention condition, and judge whether an actual state of the power battery meets a second overcharge prevention condition; and enter into the overcharge prevention mode when the actual power currently required by the hybrid vehicle meets the first overcharge prevention condition, and the actual state of the power battery meets the second overcharge prevention condition.

In some possible implementations, the mode controlling module includes: a first judging unit, configured to judge whether the actual power currently required by the hybrid vehicle is less than a first power threshold; and determine that the actual power currently required by the hybrid vehicle meets the first overcharge prevention condition when the actual power currently required by the hybrid vehicle is less than the first power threshold; and a second judging unit, configured to judge whether the actual SOC value of the power battery is greater than a third SOC threshold, and/or judge whether charging power of the power battery is less than a second power threshold; and determine that the actual state of the power battery meets the second overcharge prevention condition when the actual SOC value of the power battery is greater than the third SOC threshold and/or the charging power of the power battery is less than the second power threshold.

In some possible implementations, the mode controlling module is further configured to: exit the overcharge prevention mode if, while in the overcharge prevention mode, the actual power currently required by the hybrid vehicle does not meet the first overcharge prevention condition, or the actual state of the power battery does not meet the second overcharge prevention condition.

In a third aspect, the present application provides a computer device, including: a memory and a processor, the memory and the processor are communicatively connected with each other, the memory stores computer instructions, and the processor executes the method for controlling the hybrid vehicle according to the first aspect above or any corresponding implementation thereof by executing the computer instructions.

In a fourth aspect, the present application provides a hybrid vehicle, including: the computer device according to the third aspect above or any corresponding implementation thereof.

In a fifth aspect, the present application provides a computer-readable storage medium, the computer-readable storage medium stores computer instructions, and the computer instructions are configured to cause a computer to execute the method for controlling the hybrid vehicle according to the first aspect above or any corresponding implementation thereof.

The present application determines the corresponding first target power according to the actual SOC value of the power battery, and uses a difference between the actual power actually required by the hybrid vehicle and the first target power as the second target power that the power component needs to provide. While controlling the hybrid vehicle, it can be ensured that the SOC value of the power battery is within a reasonable range in the overcharge prevention mode, thereby effectively preventing the overcharging of the power battery.

When the actual SOC value is high, the first target power is discharging power of the power battery. When the actual SOC value is low, the first target power is charging power of the power battery. In this way, electrical energy of the power battery can be fully utilized, and overcharging or overdischarging of the power battery can be prevented.

In the overcharge prevention mode, the engine is in the rotational speed control mode, and the generator motor is in the torque control mode. By controlling the rotational speed of the engine and the torque of the generator motor, the corresponding second target power is provided. This control manner is relatively accurate, has a fast response speed, and can accurately control generated power of the generator motor, thereby achieving the purpose of preventing overcharging.

## BRIEF DESCRIPTION OF THE DRAWINGS

In order to illustrate specific implementations of the present application or technical solutions in the related art more clearly, accompanying drawings needing to be used in description of the specific implementations or the related art will be introduced below briefly. Apparently, the accompanying drawings in the description below are some implementations of the present application, and those ordinarily skilled in the art can further obtain other accompanying drawings according to these accompanying drawings without creative efforts.

FIG. 1 is a schematic flowchart of a method for controlling a hybrid vehicle according to an embodiment of the present application.
FIG. 2 is a schematic diagram of a drive structure of a hybrid vehicle according to an embodiment of the present application.
FIG. 3 is a schematic flowchart of another method for controlling a hybrid vehicle according to an embodiment of the present application.
FIG. 4 is a schematic flowchart of yet another method for controlling a hybrid vehicle according to an embodiment of the present application.
FIG. 5 is a structural block diagram of an apparatus for controlling a hybrid vehicle according to an embodiment of the present application.
FIG. 6 is a schematic structural diagram of hardware of a computer device in an embodiment of the present application.

## DETAILED DESCRIPTION

In order to make objectives, technical solutions and advantages of embodiments of the present application clearer, the technical solutions in the embodiments of the present application will be described below clearly and completely with reference to drawings in the embodiments of the present application. Apparently, the described embodiments are part of the embodiments of the present application, but not all the embodiments. All other embodiments obtained by those skilled in the art based on the embodiments in the present application without creative efforts shall fall within the protection scope of the present application.

To prevent overcharging of a power battery, a control manner of a battery management system (BMS) is generally optimized. But due to the complex control of a hybrid vehicle, this manner has limited effectiveness. Some solutions achieve overcharge protection by setting a charging power limit of the power battery. Although this manner is simple to implement, it is difficult to fundamentally solve the overcharge problem.

An embodiment of the present application provides a method for controlling a hybrid vehicle. Power related to a power battery is considered when determining power required by a power component, and the power related to the power battery is determined based on a current actual state of charge (SOC) value of the power battery. This method can ensure that the SOC value of the power battery is within a reasonable range while controlling the hybrid vehicle, thereby effectively preventing overcharging of the battery.

According to the embodiment of the present application, an embodiment of the method for controlling the hybrid vehicle is provided. It should be noted that the steps shown in the flowchart of the accompanying drawings may be executed in a computer system such as a set of computer-executable instructions, and although the logical sequence is shown in the flowchart, in some cases, the steps shown or described may be executed in a different order from the order here.

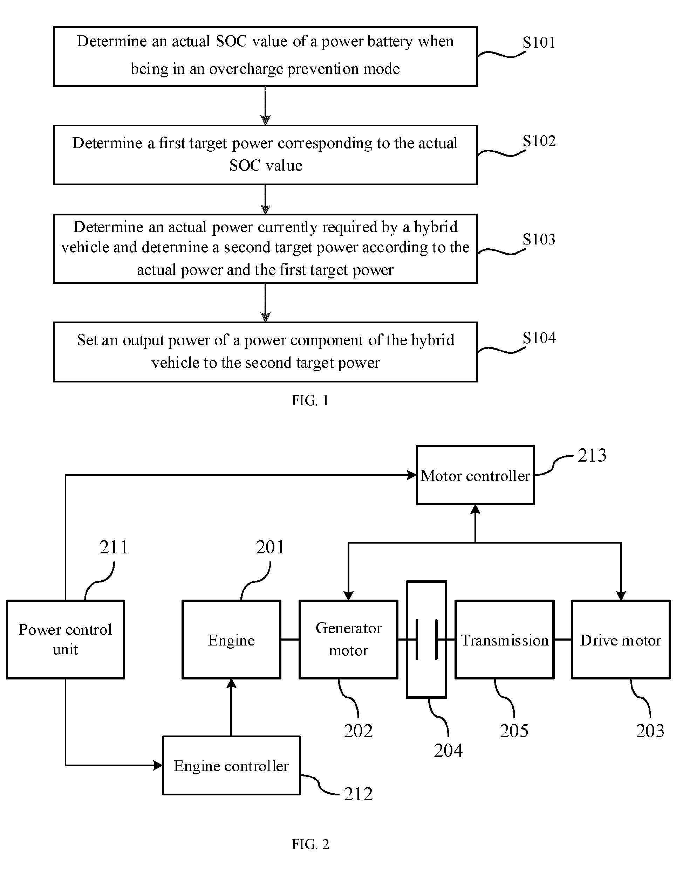

In the present embodiment, a method for controlling a hybrid vehicle is provided, and can be used for a vehicle controller of the hybrid vehicle, such as a power control unit (PCU). FIG. 1 is a flowchart of a method for controlling a hybrid vehicle according to an embodiment of the present application. As shown in FIG. 1, the flow includes the following steps.

Step S101, an actual SOC value of a power battery is determined when being in an overcharge prevention mode.

In the present embodiment, an overcharge prevention mode for preventing overcharging of the power battery is added to an operating mode of the hybrid vehicle. The hybrid vehicle may be in the overcharge prevention mode throughout an operation process. Alternatively, the hybrid vehicle can only be in the overcharge prevention mode in certain situations and operate normally in other situations. For example, conditions for entering into the overcharge prevention mode can be set, and when the hybrid vehicle meets the conditions, the hybrid vehicle can enter into the overcharge prevention mode. For example, the hybrid vehicle switches from a traditional normal mode to the overcharge prevention mode. When the hybrid vehicle is in the overcharge prevention mode, the SOC value of the power battery at a current moment, namely, the actual SOC value, can be determined in real time. For example, when the method is executed by a PCU, the PCU can obtain the actual SOC value of the power battery through a controller area network (CAN) bus.

Step S102, a first target power corresponding to the actual SOC value is determined, wherein a positive correlation exists between the actual SOC value and the first target power, and the first target power does not exceed a maximum charging and discharging power of the power battery.

In the present embodiment, for the power battery, what kind of power the power battery can provide when the SOC value of the power battery is the actual SOC value can be determined. For the convenience of description, the power that the power battery can provide at this time is referred to as the first target power. Moreover, the first target power cannot exceed the maximum charging and discharging power of the power battery, and the maximum charging and discharging power is also the maximum power that the power battery can provide.

The positive correlation exists between the actual SOC value and the first target power. That is, the larger the actual SOC value, the greater the determined first target power.

For example, a correspondence between the SOC value of the power battery and the power that the power battery can provide can be preset. After determining the current actual SOC value of the power battery, the corresponding first target power can be determined based on the correspondence.

Step S103, an actual power currently required by the hybrid vehicle is determined, and a second target power is determined according to the actual power and the first target power, wherein the second target power is derived by subtracting the first target power from the actual power.

In the present embodiment, a certain amount of power is also required during the operation of the hybrid vehicle, wherein, the power currently required by the hybrid vehicle is referred to as the actual power. For example, during the operation of the hybrid vehicle, power required by a driver may be determined based on operations of the driver. For example, the power required by the driver may be determined based on an opening degree of an accelerator pedal. Moreover, some electrical devices of the hybrid vehicle also require a certain amount of power, which can also be used as a part of the actual power.

After determining the actual power and the first target power, a difference between the actual power and the first target power is used as another required target power, namely the second target power, and the second target power is derived by subtracting the first target power from the actual power.

Step S104, an output power of a power component of the hybrid vehicle is set as the second target power.

The hybrid vehicle is provided with the corresponding power component, and the power component drives the operation of the hybrid vehicle. The power component includes an engine and a generator motor.

For example, the hybrid vehicle may be a hybrid electric vehicle with P13 configuration, and the engine of the hybrid vehicle is in a series mode. For a drive structure of the hybrid vehicle, reference may be made to FIG. 2. As shown in FIG. 2, the drive structure includes: an engine 201, a generator motor 202, a drive motor 203, a clutch 204, and a transmission 205. The generator motor 202 is connected in series with the engine 201. In addition to having a driving function, the generator motor 202 can also charge the power battery when the power is sufficient. Specifically, the generator motor 202 may provide energy to the drive motor 203 and may also charge the power battery. The drive motor 203 may convert electrical energy into kinetic energy to drive movement of the vehicle.

The hybrid electric vehicle with the P13 configuration includes a P1 motor and a P3 motor, as shown in FIG. 2, the generator motor 202 is a P1 motor, and the drive motor 203 is a P3 motor, wherein, P represents a position of the motor. As shown in FIG. 2, the generator motor 202 (the P1 motor) is located on a crankshaft of the engine 201, and located in front of the clutch 204. Generally, a rotational speed of the P1 motor is the same as that of the engine 201. The drive motor 203 (the P3 motor) is located at an output end of the transmission 205.

In the present embodiment, after determining the second target power, the output power of the power component of the hybrid vehicle may be set as the second target power, so that the power provided by the engine and the generator motor matches the second target power.

Since the second target power is the difference between the actual power and the first target power, and the positive correlation exists between the first target power and the current actual SOC value, for the same actual power, the larger the actual SOC value of the power battery, the higher the corresponding first target power, and correspondingly, the smaller the second target power. Therefore, when the SOC value of the power battery itself is high, the power component of the hybrid vehicle only needs to provide the small second target power. Even if the power provided by the power component changes, a change value may not be too large, and there may be basically no overcharging of the power battery.

Similarly, if the actual SOC value of the power battery is small, the corresponding first target power is also small. At this time, although the second target power is large, due to the small actual SOC value of the power battery, overcharging of the power battery is less likely to occur, thus effectively avoiding overcharging of the power battery. According to the method for controlling the hybrid vehicle provided by the present embodiment, the corresponding first target power is determined according to the actual SOC value of the power battery, and the difference between the actual power actually required by the hybrid vehicle and the first target power is used as the second target power that the power component needs to provide. While controlling the hybrid vehicle, it can be ensured that the SOC value of the power battery is within a reasonable range in the overcharge prevention mode, thereby effectively preventing the overcharging of the power battery.

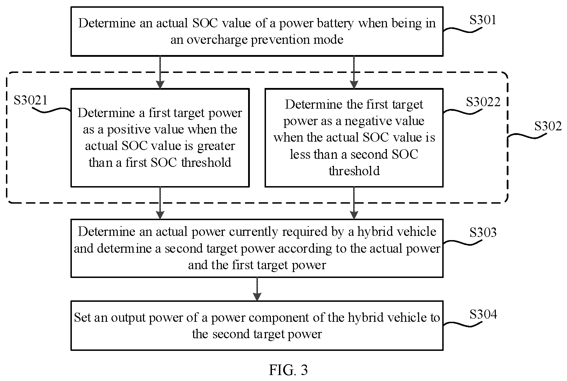

In the present embodiment, a method for controlling a hybrid vehicle is provided, and can be used for a vehicle controller of the hybrid vehicle, such as a power control unit (PCU). FIG. 3 is a flowchart of a method for controlling a hybrid vehicle according to an embodiment of the present application. As shown in FIG. 3, the flow includes the following steps.

Step S301, an actual SOC value of a power battery is determined when being in an overcharge prevention mode. Reference may be made to step S101 of the embodiment shown in FIG. 1 for details, which may not be repeated here. Step S302, a first target power corresponding to the actual SOC value is determined, wherein a positive correlation exists between the actual SOC value and the first target power, and the first target power does not exceed a maximum charging and discharging power of the power battery.

In the present embodiment, in order to ensure that the power battery can provide discharging power when the current actual SOC value of the power battery is large, so that the second target power can be smaller, the first target power corresponding to the large actual SOC value may be a positive value.

Specifically, above step S302 of determining the first target power corresponding to the actual SOC value includes the following step S3021 to step S3022.

Step S3021, the first target power is determined as a positive value when the actual SOC value is greater than a first SOC threshold.

Step S3022, the first target power is determined as a negative value when the actual SOC value is less than a second SOC threshold. The first SOC threshold is greater than or equal to the second SOC threshold.

In the present embodiment, when the actual SOC value is greater than the first SOC threshold, the first target power is a positive value, that is, the first target power is greater than 0. When the actual SOC value is less than the second SOC threshold, the first target power is a negative value, that is, the first target power is less than 0. It may be understood that the first target power as the positive value represents a discharging power of the power battery, and the first target power as the negative value represents the charging power of the power battery.

The first SOC threshold may be equal to the second SOC threshold, for example, the first SOC threshold is equal to the second SOC threshold and equal to 50%. Correspondingly, when the actual SOC of the power battery is greater than 50%, the first target power is the positive value, and the power battery provides the corresponding discharging power. When the actual SOC of the power battery is less than 50%, the first target power is the negative value, and the power battery provides the corresponding charging power, which means that the power battery can be charged at this time. Alternatively, the first SOC threshold may also be greater than the second SOC threshold. For example, the first SOC threshold is 80%, the second SOC threshold is 30%, and so on. If the actual SOC value of the power battery is between the second SOC threshold and the first SOC value, that is, if the actual SOC value is greater than the second SOC threshold and is less than the first SOC value, then the first target power provided by the power battery may be 0, and the power battery is neither charged nor discharged at this time.

The correspondence between the SOC value of the power battery and the power that the power battery can provide may be preset, and the correspondence may be a function relationship between the two or a correspondence table.

For example, a monotonically increasing function may be configured to represent the correspondence between the SOC value of the power battery and the power that the power battery can provide. If the first SOC threshold is greater than the second SOC threshold, the function may be a piecewise function. Alternatively, the correspondence table may also be configured to represent the correspondence between various SOC values and corresponding power. For example, one correspondence table may be shown in Table 1 below.

Table 1

| Actual SOC value (%) | 0 | 10 | 20 | 30 | 40 | 50 | 80 | 85 | 90 | 92 | 94 | 96 | 98 | 100 |
|---|---|---|---|---|---|---|---|---|---|---|---|---|---|---|
| First target power (KW) | -2 | -2 | -2 | -1 | 0 | 0 | 0 | 0 | 0 | 0 | 1 | 2 | 2 | 2 |

It may be understood that the first target power is the power provided by the power battery, and will be limited by the performance of the power battery itself. In other words, the first target power is limited by charging and discharging power of the power battery, that is, the first target power does not exceed the maximum charging and discharging power of the power battery. For example, the power battery itself has certain maximum charging power and maximum discharging power. If the first target power that the power battery can currently provide is the discharging power, that is, the power battery can be discharged currently, then the first target power cannot exceed the maximum discharging power. Similarly, if the first target power that the power battery can currently provide needs to be the charging power, that is, the power battery can be charged currently, then the first target power cannot exceed the maximum charging power.

Step S303, an actual power currently required by the hybrid vehicle is determined, and a second target power is determined according to the actual power and the first target power, wherein the second target power is derived by subtracting the first target power from the actual power.

Reference may be made to step S103 of the embodiment shown in FIG. 1 for details, which may not be repeated here. In some optional implementations, above step S303 of determining the actual power currently required by the hybrid vehicle includes the following step A1 to step A3.

Step A1, an actual power of a drive motor is determined according to an actual rotational speed and an actual torque of the drive motor of the hybrid vehicle.

Although the actual power of the hybrid vehicle may be determined based on operations (such as an opening degree of an accelerator pedal) of a driver, there may be differences between the power determined based on this and the real actual power. For example, an engine has inertia, and after the driver steps on the accelerator pedal, it takes some time to reach the power required by the driver. During this period of time, the actual power gradually increases. In the present embodiment, the actual power required can be more accurately determined by using the drive motor in the hybrid vehicle.

Specifically, the hybrid vehicle includes the drive motor. As shown in FIG. 2, the hybrid vehicle with P13 configuration includes a P3 motor, namely a drive motor 203. When it is necessary to determine the actual power currently required by the hybrid vehicle, the current actual rotational speed and actual torque of the drive motor may be determined, and based on this, the actual power required by the drive motor may be determined.

Based on a relational expression among a rotational speed, a torque, and the power, the actual rotational speed and the actual torque of the drive motor may be used as inputs to calculate the actual power of the drive motor. Specifically, the actual power of the drive motor is derived by multiplying the actual rotational speed by the actual torque and dividing the product by a; wherein a is a conversion coefficient of the relational expression among the rotational speed, the torque, and the power, and the conversion coefficient a is a constant value. In general, a=9550.

Step A2, an actual power of a high-voltage accessory is determined according to a voltage and a current of the high-voltage accessory of the hybrid vehicle.

In the present embodiment, the hybrid vehicle contains multiple electrical devices, wherein the high-voltage accessory is the main device that require most of the power consumption. The high-voltage accessory refers to a component that operates under high-voltage conditions (such as an operating voltage of not less than 24 V) and assists in the operation of the hybrid vehicle. For example, the high-voltage accessory may include: an air conditioning compressor, an electric heater, a voltage converter (DC-DC), etc.

Specifically, the real-time input voltage and current of these high-voltage accessories can be acquired, and then the actual power of each high-voltage accessory may be determined. The actual power of the high-voltage accessories is derived by multiplying the voltage by the current.

Step A3, a sum of the actual power of the drive motor and the actual power of the high-voltage accessory is used as the actual power currently required by the hybrid vehicle.

In the present embodiment, the actual power of the drive motor is configured to represent the required power of the driver, which is not only simple to implement, but also can accurately represent the power currently required by the hybrid vehicle. The actual power of all the high-voltage accessories can basically represent the power of all electrical devices in the hybrid vehicle. Therefore, the actual power currently required by the hybrid vehicle may be the sum of the actual power of the drive motor and the actual power of all the high-voltage accessories.

Step S304, an output power of a power component of the hybrid vehicle is set to the second target power.

Reference may be made to step S104 of the embodiment shown in FIG. 1 for details, which may not be repeated here.

According to the method for controlling the hybrid vehicle provided by the present embodiment, the hybrid vehicle is controlled by utilizing the second target power with the first target power removed, which can effectively prevent overcharging of the power battery. Moreover, when the actual SOC value is high, the first target power is the discharging power of the power battery. When the actual SOC value is low, the first target power is the charging power of the power battery. In this way, electrical energy of the power battery can be fully utilized, and overcharging or overdischarging of the power battery can be prevented.

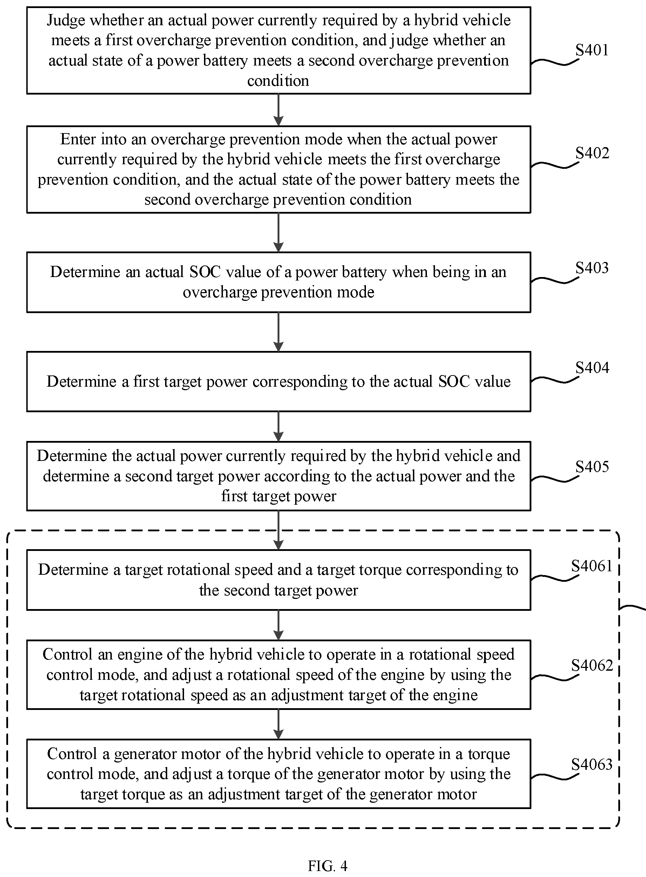

In the present embodiment, a method for controlling a hybrid vehicle is provided, which is applied to a power control nit (PCU). FIG. 4 is a flowchart of a method for controlling a hybrid vehicle according to an embodiment of the present application. As shown in FIG. 4, the flow includes the following steps.

Step S401, whether an actual power currently required by a hybrid vehicle meets a first overcharge prevention condition is judged, and whether an actual state of a power battery meets a second overcharge prevention condition is judged. Step S402, it enters into an overcharge prevention mode when the actual power currently required by the hybrid vehicle meets the first overcharge prevention condition, and the actual state of the power battery meets the second overcharge prevention condition.

In the present embodiment, the hybrid vehicle needs to enter into the overcharge prevention mode only when the power battery needs to be protected against overcharging.

The overcharge prevention condition corresponding to the actual power currently required by the hybrid vehicle, namely the first overcharge prevention condition is preset, and the overcharge prevention condition corresponding to the actual state of the power battery, namely the second overcharge prevention condition is preset. If both the overcharge prevention conditions are met, it can be considered that the power battery needs to be protected against overcharging, and the power battery may enter into the overcharge prevention mode at this time.

Optionally, above step S401 of judging whether the actual power currently required by the hybrid vehicle meets the first overcharge prevention condition, and judging whether the actual state of the power battery meets the second overcharge prevention condition include the following step B1 to step B4.

Step B1, whether the actual power currently required by the hybrid vehicle is less than a first power threshold is judged. Step B2, it is determined that the actual power currently required by the hybrid vehicle meets the first overcharge prevention condition when the actual power currently required by the hybrid vehicle is less than the first power threshold.

In the present embodiment, the actual power currently required by the hybrid vehicle may be determined in real time. For example, the actual power may be determined based on the manners shown in step A1 to step A3 above. If the actual power is less than the first power threshold, then when subsequently determining the second target power based on the method provided in the present embodiment, the second target power may not be too high. Therefore, the hybrid vehicle is allowed to enter into the overcharge prevention mode, that is, the actual power currently required by the hybrid vehicle meets the first overcharge prevention condition.

In order to avoid entering into the overcharge prevention mode when there is a high demand for power such as acceleration, the first power threshold should not be set too high, that is, the first power threshold needs to be less than a certain value.

Step B3, whether an actual SOC value of the power battery is greater than a third SOC threshold is judged, and/or whether charging power of the power battery is less than a second power threshold is judged.

Step B4, it is determined that the actual state of the power battery meets the second overcharge prevention condition when the actual SOC value of the power battery is greater than the third SOC threshold and/or the charging power of the power battery is less than the second power threshold.

In the present embodiment, if it is determined based on the current actual state of the power battery that the power battery can be protected against overcharging, it can be considered that the power battery meets the corresponding second overcharge prevention condition. Whether the second overcharge prevention condition is met is judged based on the actual SOC value of the power battery and/or the charging power of the power battery.

Specifically, if the actual SOC value of the power battery is greater than a certain threshold, namely, the third SOC threshold, it can indicate that the current SOC value of the power battery is high and there is a risk of overcharging. Therefore, overcharge protection may be implemented at this time, that is, the actual state of the power battery meets the second overcharge prevention condition.

Alternatively, if the charging power of the power battery is less than the set second power threshold, overcharging of the battery is also likely to occur at this time. Therefore, overcharge protection may also be implemented at this time. That is, it is determined that the actual state of the power battery meets the second overcharge prevention condition, and the power battery is allowed to enter into the overcharge prevention mode.

Step S403, the actual SOC value of the power battery is determined when being in the overcharge prevention mode. Reference may be made to step S101 of the embodiment shown in FIG. 1 for details, which may not be repeated here.

It can be understood that if the actual SOC value of the power battery has already been acquired when judging whether to enter into the overcharge prevention mode, there is no need to acquire it repeatedly, and the acquired actual SOC value can be directly used.

Step S404, a first target power corresponding to the actual SOC value is determined, wherein a positive correlation exists between the actual SOC value and the first target power, and the first target power does not exceed a maximum charging and discharging power of the power battery.

Reference may be made to step S 102 of the embodiment shown in FIG. 1 for details, which may not be repeated here. Step S405, the actual power currently required by the hybrid vehicle is determined, and a second target power is determined according to the actual power and the first target power, wherein the second target power is derived by subtracting the first target power from the actual power.

Reference may be made to step S103 of the embodiment shown in FIG. 1 for details, which may not be repeated here.

It can be understood that if the actual power currently required by the hybrid vehicle has already been acquired when judging whether to enter into the overcharge prevention mode, there is no need to acquire it repeatedly, and the acquired actual power currently required by the hybrid vehicle can be directly used.

Step S406, an output power of a power component of the hybrid vehicle is set to the second target power.

Specifically, above step S406 of setting the output power of the power component of the hybrid vehicle to the second target power may include the following step S4061 to step S4063.

Step S4061, a target rotational speed and a target torque corresponding to the second target power are determined.

In the present embodiment, the second target power needing to be provided by the power component is converted into the corresponding rotational speed and torque, namely the target rotational speed and the target torque, so as to control the power outputted by the power component based on the target rotational speed and the target torque.

Step S4062, an engine of the hybrid vehicle is controlled to operate in a rotational speed control mode, and a rotational speed of the engine is adjusted by using the target rotational speed as an adjustment target of the engine.

Step S4063, a generator motor of the hybrid vehicle is controlled to operate in a torque control mode, and a torque of the generator motor is adjusted by using the target torque as an adjustment target of the generator motor.

Controlling of the hybrid vehicle is generally achieved by controlling the torque of the engine. For example, engine fuel injection quantity and an ignition angle can be adjusted to enable the engine to quickly adjust the torque. However, the torque adjustment of the engine requires response time and has a certain lag, and the torque accuracy of the engine is greatly affected by external environments such as low temperature and high altitude, resulting in certain deviations.

In the present embodiment, in the overcharge prevention mode, the rotational speed of the engine is controlled and the torque of the generator motor is controlled to achieve the output of the second target power. Because the rotational speed of the engine can be accurately controlled, the torque control of the generator motor is more accurate, the response is faster, and the torque accuracy of the generator motor is less affected by external environmental factors, the generated power of the generator motor can be accurately controlled in the overcharge prevention mode by utilizing these characteristics of the generator motor, thereby achieving the purpose of preventing overcharging of the battery. Specifically, in the overcharge prevention mode, the engine of the hybrid vehicle may be controlled to operate in the rotational speed control mode, and the generator motor of the hybrid vehicle may be controlled to operate in the torque control mode. When it is determined that the hybrid vehicle currently needs to enter into the overcharge prevention mode, the engine may be controlled to operate in the rotational speed control mode and the generator motor may be controlled to operate in the torque control mode, and then the controlling may be performed directly based on the target rotational speed and the target torque.

For example, as shown in FIG. 2, the operation of the engine 201 may be controlled by an engine controller 212, and the operation of the generator motor 202 and a drive motor 203 may be controlled by a motor controller 213. The engine controller 212 may specifically be an electronic control unit (ECU), and the motor controller 213 may specifically be a power electric unit (PEU).

A hybrid controller 211 may judge in real time whether it is necessary to enter into the overcharge prevention mode currently. When the condition is met, it may enter into the overcharge prevention mode. The hybrid controller 211 sends a rotational speed control instruction to the engine controller 212, so that the engine controller 212 controls the engine 201 to switch to the rotational speed control mode. Moreover, the hybrid controller 211 sends a torque control instruction to the motor controller 213, so that the motor controller 213 controls the generator motor 202 to switch to the torque control mode.

Moreover, when in the overcharge prevention mode, the hybrid controller 211 may determine the corresponding target rotational speed and target torque in real time, send the target rotational speed to the engine controller 212 and send the target torque to the motor controller 213. The engine controller 212 may use the target rotational speed as the adjustment target, so as to adjust the rotational speed of the engine 201 to the target rotational speed. Moreover, the motor controller 213 may use the target torque as the adjustment target, so as to adjust the torque of the generator motor 202 to the target torque, thereby achieving control over the engine 201 and the generator motor 202.

In some optional implementations, the target rotational speed may be determined first, and then the target torque may be determined. Specifically, above step S4061 of determining the target rotational speed and target torque corresponding to the second target power may include the following step C1 to step C2.

Step C1, an engine rotational speed corresponding to the second target power is determined according to a preset correspondence between an engine power and the engine rotational speed, and the engine rotational speed corresponding to the second target power is used as the target rotational speed.

In the present embodiment, the rotational speed is adjusted by the engine. Correspondingly, the correspondence between the engine power and the engine rotational speed may be established in advance. For example, to improve fuel economy, the correspondence between the engine power and the engine rotational speed may be set based on an optimal fuel consumption line. For example, one correspondence between the engine power and the engine rotational speed may be shown in Table 2 below.

Table 2

| Power (KW) | 0 | 10 | 12 | 14 | 18 | 22 | 24 | 28 |
|---|---|---|---|---|---|---|---|---|
| Rotational speed (rpm) | 1200 | 1300 | 1400 | 1500 | 1600 | 1700 | 1800 | 1900 |

It may be understood that the engine rotational speed corresponding to the second target power may be determined based on the above correspondence, and the engine rotational speed may be used as the required target rotational speed. Taking Table 2 above as an example, if the calculated second target power is 14 KW, the corresponding target rotational speed is 1500 rpm.

Step C2, the target torque corresponding to the second target power is determined. The target torque satisfies that:

$$T_{target}=a*P_2/n_{target};$$

wherein $T_{target}$ represents the target torque, $P_2$ represents the second target power, $n_{target}$ represents the target rotational speed, and a is a conversion coefficient.

In the present embodiment, after determining the second target power and the target rotational speed, the target torque may be determined based on the relational expression among the rotational speed, the torque, and the power. Specifically, if the second target power is $P_2$, the target rotational speed is $n_{target}$, and the target torque is $T_{target}$, then $P_2=$

$$n_{target} * T_{target} /a, \text{ that is, } T_{target}=a*P_2/n_{target}.$$

Optionally, the method may further include: exiting the overcharge prevention mode if, while in the overcharge prevention mode, the actual power currently required by the hybrid vehicle does not meet the first overcharge prevention condition, or the actual state of the power battery does not meet the second overcharge prevention condition. Specifically, in contrast to the process of determining to enter into the overcharge prevention mode in step S401 to step S402 above, if any of the overcharge prevention conditions is not currently met, it may exit the overcharge prevention mode.

According to the method for controlling the hybrid vehicle provided by the present embodiment, the hybrid vehicle is controlled by utilizing the second target power with the first target power removed, which can effectively prevent overcharging of the power battery. Moreover, in the overcharge prevention mode, the engine is in the rotational speed control mode, and the generator motor is in the torque control mode. By controlling the rotational speed of the engine and the torque of the generator motor, the corresponding second target power is provided. This control manner is relatively accurate, has a fast response speed, and can accurately control generated power of the generator motor, thereby achieving the purpose of preventing overcharging.

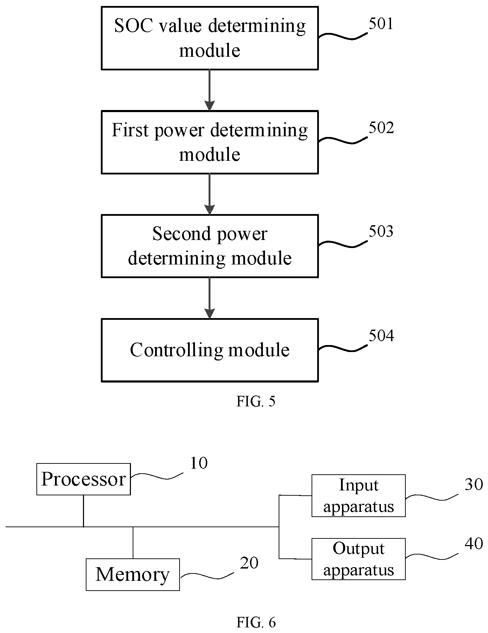

In the present embodiment, an apparatus for controlling a hybrid vehicle is further provided, the apparatus is configured to implement the above embodiments and optional implementations, and those that have already been described will not be repeated. As used below, a term "module" may be a combination of software and/or hardware for implementing predetermined functions. Although the apparatus described in the following embodiments is preferably implemented in software, the implementation of hardware, or a combination of software and hardware, is also possible and envisioned. The present embodiment provides an apparatus for controlling a hybrid vehicle, as shown in FIG. 5, including: an SOC value determining module 501, a first power determining module 502, a second power determining module 503, and a controlling module 504.

The SOC value determining module 501 is configured to determine an actual SOC value of a power battery when being in an overcharge prevention mode.

The first power determining module 502 is configured to determine a first target power corresponding to the actual SOC value, wherein a positive correlation exists between the actual SOC value and the first target power, and the first target power does not exceed a maximum charging and discharging power of the power battery.

The second power determining module 503 is configured to determine an actual power currently required by the hybrid vehicle and determine a second target power according to the actual power and the first target power, wherein the second target power is derived by subtracting the first target power from the actual power.

The controlling module 504 is configured to set an output power of a power component of the hybrid vehicle to the second target power.

In some optional implementations, when the actual SOC value is greater than a first SOC threshold, the first target power is a positive value; and when the actual SOC value is less than a second SOC threshold, the first target power is a negative value, wherein the first SOC threshold is greater than or equal to the second SOC threshold.

In some optional implementations, the controlling module 504 includes a determining unit, a rotational speed controlling unit, and a torque controlling unit.

The determining unit is configured to determine a target rotational speed and a target torque corresponding to the second target power.

The rotational speed controlling unit is configured to control an engine of the hybrid vehicle to operate in a rotational speed control mode, and adjust a rotational speed of the engine by using the target rotational speed as an adjustment target of the engine.

The torque controlling unit is configured to control a generator motor of the hybrid vehicle to operate in a torque control mode, and adjust a torque of the generator motor by using the target torque as an adjustment target of the generator motor.

In some optional implementations, the determining unit includes: a rotational speed determining subunit, and a torque determining subunit.

The rotational speed determining subunit is configured to determine an engine rotational speed corresponding to the second target power according to a preset correspondence between an engine power and the engine rotational speed, and use the engine rotational speed corresponding to the second target power as the target rotational speed.

The torque determining subunit is configured to determine the target torque corresponding to the second target power, wherein the target torque satisfies that:

$$T_{target}=a*P_2/n_{target};$$

wherein $T_{target}$ represents the target torque, $P_2$ represents the second target power, $n_{target}$ represents the target rotational speed, and a is a conversion coefficient.

In some optional implementations, determining, by the second power determining module, the actual power currently required by the hybrid vehicle includes: determining an actual power of a drive motor according to an actual rotational speed and an actual torque of the drive motor of the hybrid vehicle; determining an actual power of a high-voltage accessory according to a voltage and a current of the high-voltage accessory of the hybrid vehicle; and using a sum of the actual power of the drive motor and the actual power of the high-voltage accessory as the actual power currently required by the hybrid vehicle.

In some optional implementations, the apparatus further includes: a mode controlling module.

The mode controlling module is configured to: judge whether the actual power currently required by the hybrid vehicle meets a first overcharge prevention condition, and judge whether an actual state of the power battery meets a second overcharge prevention condition; and enter into the overcharge prevention mode when the actual power currently required by the hybrid vehicle meets the first overcharge prevention condition, and the actual state of the power battery meets the second overcharge prevention condition.

In some optional implementations, the mode controlling module includes: a first judging unit and a second judging unit. The first judging unit is configured to judge whether the actual power currently required by the hybrid vehicle is less than a first power threshold; and determine that the actual power currently required by the hybrid vehicle meets the first overcharge prevention condition when the actual power currently required by the hybrid vehicle is less than the first power threshold.

The second judging unit is configured to judge whether the actual SOC value of the power battery is greater than a third SOC threshold, and/or judge whether a charging power of the power battery is less than a second power threshold; and determine that the actual state of the power battery meets the second overcharge prevention condition when the actual SOC value of the power battery is greater than the third SOC threshold and/or the charging power of the power battery is less than the second power threshold.

In some optional implementations, the mode controlling module is further configured to: exit the overcharge prevention mode if, while in the overcharge prevention mode, the actual power currently required by the hybrid vehicle does not meet the first overcharge prevention condition, or the actual state of the power battery does not meet the second overcharge prevention condition.

The further functional descriptions of each module and unit above are the same as the corresponding embodiments above, and may not be repeated here.

The apparatus for controlling the hybrid vehicle in the present embodiment is presented in a form of a functional unit, the unit here refers to an application specific integrated circuit (ASIC), including a processor and memory that execute one or more software or a fixed program, and/or other devices that may provide the above functions.

An embodiment of the present application further provides a computer device. The computer device may be, for example, a vehicle controller.

Referring to FIG. 6, FIG. 6 is a schematic structural diagram of a computer device provided by an optional embodiment of the present application. As shown in FIG. 6, the computer device includes: one or more processors 10, a memory 20 and interfaces for being connected with various components, including a high-speed interface and a low-speed interface. The components are communicatively connected with each other by using different buses and may be installed on a common mainboard or otherwise installed as needed. The processor may process instructions executed in the computer device, including instructions stored in the memory or on the memory to be used for displaying graphic information of a GUI on an external input/output apparatus (such as a display device coupled to the interface). In some optional implementations, if desired, a plurality of processors and/or a plurality of buses may be used together with a plurality of memories. Also, a plurality of computer devices may be connected, each providing a part of necessary operations (for example, as a server array, a group of blade servers or a multi-processor system). One processor 10 is taken as an example in FIG. 6.

The processor 10 may be a central processing unit, a network processor, or a combination thereof. The processor 10 may further include a hardware chip. The hardware chip above may be an application specific integrated circuit, a programmable logic device, or a combination thereof. The programmable logic device above may be a complex programmable logic device, a field programmable logic gate array, a general-purpose array logic, or any combination thereof.

The memory 20 stores instructions executable by the at least one processor 10, such that the at least one processor 10 executes the method shown in the embodiment above.

The memory 20 may include a program storage area and a data storage area, wherein the program storage area may store an operating system and an application required by at least one function; and the data storage area may store data created according to use of a computer device. In addition, the memory 20 may include a high-speed random access memory, and may also include a non-transitory memory, such as at least one disk storage device, a flash memory device, or other non-transitory solid-state storage devices. In some optional implementations, the memory 20 optionally includes memories which are remotely disposed relative to the processor 10, and these remote memories may be connected to the computer device through a network. Instances of the above network include but not limited to an Internet, an intranet, a local area network, a mobile communication network and their combination.

The memory 20 may include a volatile memory, such as a random access memory. The memory may also include a non-volatile memory, such as a flash memory, a hard disk drive, or a solid-state drive. The memory 20 may also include a combination of the memories of the above types.

The computer device may further include an input apparatus 30 and an output apparatus 40. The processor 10, the memory 20, the input apparatus 30 and the output apparatus 40 may be connected through a bus or other manners. In FIG. 6, a bus connection is taken as an example.

The input apparatus 30 may receive input digital or character information and generate key signal input related to user settings and function control of the computer device, such as a touch screen, a keypad, a mouse, a trackpad, a touch pad, an indicator bar, one or more mouse buttons, a trackball, and a joystick. The output apparatus 40 may include a display device, an auxiliary lighting apparatus (e.g., LED), a tactile feedback apparatus (e.g., a vibration motor), etc. The display device above may include but not limited to a liquid crystal display, a light emitting diode, a display and a plasma display. In some optional implementations, the display device may be a touch screen.

An embodiment of the present application further provides a hybrid vehicle, and the hybrid vehicle includes the above computer device. For example, the computer device is a vehicle controller for the hybrid vehicle, or a hybrid controller, etc.

An embodiment of the present application further provides a computer-readable storage medium. The above method according to the embodiment of the present application may be implemented in hardware, firmware, or as a computer code that can be recorded on a storage medium, or can be downloaded through a network, originally stored on a remote storage medium or non-temporary machine-readable storage medium and will be stored on a local storage medium. Therefore, the method described herein can be processed by such software stored on a storage medium using a general-purpose computer, a dedicated processor, or programmable or dedicated hardware. The storage medium may be a magnetic disk, an optic disk, a read-only memory, a random access memory, a flash memory, a hard disk drive or a solid-state drive, and furthermore, the storage medium may further include a combination of the memories of the above types. It can be understood that the computer, the processor, the microprocessor controller, or the programmable hardware includes a storage component that can store or receive a software or computer code. When the software or computer code is accessed and executed by the computer, the processor, or the hardware, the method shown in the above embodiments is implemented.

Although embodiments of the present application are described in combination with the drawings, those skilled in the art can make various modifications and variations without departing from the spirit and scope of the present application. Such modifications and variations fall within the scope defined by the appended claims.

**Claims**

1. A method for controlling a hybrid vehicle, comprising:

   determining an actual state of charge (SOC) value of a power battery when being in an overcharge prevention mode;
   determining a first target power corresponding to the actual SOC value, wherein a positive correlation exists between the actual SOC value and the first target power, and the first target power does not exceed a maximum charging and discharging power of the power battery;
   determining an actual power currently required by the hybrid vehicle, and determining a second target power according to the actual power and the first target power, wherein the second target power is derived by subtracting the first target power from the actual power; and
   setting an output power of a power component of the hybrid vehicle as the second target power.

2. The method according to claim 1, **characterized in that**,

   when the actual SOC value is greater than a first SOC threshold, the first target power is a positive value; and
   when the actual SOC value is less than a second SOC threshold, the first target power is a negative value; wherein the first SOC threshold is greater than or equal to the second SOC threshold.

3. The method according to claim 1, **characterized in that**, setting the output power of the power component of the hybrid vehicle to the second target power comprises:

   determining a target rotational speed and a target torque corresponding to the second target power;
   controlling an engine of the hybrid vehicle to operate in a rotational speed control mode, and adjusting a rotational speed of the engine by using the target rotational speed as an adjustment target of the engine; and
   controlling a generator motor of the hybrid vehicle to operate in a torque control mode, and adjusting a torque of the generator motor by using the target torque as an adjustment target of the generator motor.

4. The method according to claim 3, **characterized in that**, determining the target rotational speed and the target torque corresponding to the second target power comprises:

   determining an engine rotational speed corresponding to the second target power according to a preset correspondence between an engine power and the engine rotational speed, and using the engine rotational speed corresponding to the second target power as the target rotational speed; and
   determining the target torque corresponding to the second target power, wherein the target torque satisfies that:

$$T_{target} = a * P_2 / n_{target};$$

wherein $T_{target}$ represents the target torque, $P_2$ represents the second target power, $n_{target}$ represents the target rotational speed, and a is a conversion coefficient.

5. The method according to claim 1, **characterized in that**, determining the actual power currently required by the hybrid vehicle comprises:

determining an actual power of a drive motor according to an actual rotational speed and an actual torque of the drive motor of the hybrid vehicle;
determining an actual power of a high-voltage accessory according to a voltage and a current of the high-voltage accessory of the hybrid vehicle; and
using a sum of the actual power of the drive motor and the actual power of the high-voltage accessory as the actual power currently required by the hybrid vehicle.

6. The method according to claim 1, **characterized in that**, the method further comprising:

judging whether the actual power currently required by the hybrid vehicle meets a first overcharge prevention condition, and judging whether an actual state of the power battery meets a second overcharge prevention condition; and
entering into the overcharge prevention mode when the actual power currently required by the hybrid vehicle meets the first overcharge prevention condition, and the actual state of the power battery meets the second overcharge prevention condition.

7. The method according to claim 6, **characterized in that**, judging whether the actual power currently required by the hybrid vehicle meets the first overcharge prevention condition, and judging whether the actual state of the power battery meets the second overcharge prevention condition comprise:

judging whether the actual power currently required by the hybrid vehicle is less than a first power threshold;
determining that the actual power currently required by the hybrid vehicle meets the first overcharge prevention condition when the actual power currently required by the hybrid vehicle is less than the first power threshold;
judging whether the actual SOC value of the power battery is greater than a third SOC threshold, and/or judging whether charging power of the power battery is less than a second power threshold; and
determining that the actual state of the power battery meets the second overcharge prevention condition when the actual SOC value of the power battery is greater than the third SOC threshold and/or the charging power of the power battery is less than the second power threshold.

8. The method according to claim 6, **characterized in that**, the method further comprising:
exiting the overcharge prevention mode if, while in the overcharge prevention mode, the actual power currently required by the hybrid vehicle does not meet the first overcharge prevention condition, or the actual state of the power battery does not meet the second overcharge prevention condition.

9. An apparatus for controlling a hybrid vehicle, comprising:

an SOC value determining module, configured to determine an actual SOC value of a power battery when being in an overcharge prevention mode;
a first power determining module, configured to determine first target power corresponding to the actual SOC value, wherein a positive correlation exists between the actual SOC value and the first target power, and the first target power does not exceed a maximum charging and discharging power of the power battery;
a second power determining module, configured to determine an actual power currently required by the hybrid vehicle and determine second target power according to the actual power and the first target power, wherein the second target power is derived by subtracting the first target power from the actual power; and
a controlling module, configured to set an output power of a power component of the hybrid vehicle as the second target power.

10. The apparatus according to claim 9, **characterized in that**,

when the actual SOC value is greater than a first SOC threshold, the first target power is a positive value; and
when the actual SOC value is less than a second SOC threshold, the first target power is a negative value; wherein the first SOC threshold is greater than or equal to the second SOC threshold.

11. The apparatus according to claim 9, **characterized in that**, the controlling module comprises:

a determining unit, configured to determine a target rotational speed and a target torque corresponding to the second target power;
a rotational speed controlling unit, configured to control an engine of the hybrid vehicle to operate in a rotational speed control mode, and adjust a rotational speed of the engine by using the target rotational speed as an adjustment target of the engine; and
a torque controlling unit, configured to control a generator motor of the hybrid vehicle to operate in a torque control mode, and adjust a torque of the generator motor by using the target torque as an adjustment target of the generator motor.

12. The apparatus according to claim 11, wherein the determining unit comprises:

a rotational speed determining subunit, configured to determine an engine rotational speed corresponding to the second target power according to a preset correspondence between engine power and the engine rotational speed, and use the engine rotational speed corresponding to the second target power as the target rotational speed; and
a torque determining subunit, configured to determine the target torque corresponding to the second target power, wherein the target torque satisfies that:

$$T_{target}=a*P_2/n_{target};$$

wherein $T_{target}$ represents the target torque, $P_2$ represents the second target power, $n_{target}$ represents the target rotational speed, and a is a conversion coefficient.

13. The apparatus according to claim 9, **characterized in that**, determining, by the second power determining module, the actual power currently required by the hybrid vehicle comprises:

determining an actual power of a drive motor according to an actual rotational speed and an actual torque of the drive motor of the hybrid vehicle;
determining an actual power of a high-voltage accessory according to a voltage and a current of the high-voltage accessory of the hybrid vehicle; and
using a sum of the actual power of the drive motor and the actual power of the high-voltage accessory as the actual power currently required by the hybrid vehicle.

14. The apparatus according to claim 9, **characterized in that**, the apparatus further comprising a mode controlling module, configured to:

judge whether the actual power currently required by the hybrid vehicle meets a first overcharge prevention condition, and judge whether an actual state of the power battery meets a second overcharge prevention condition; and
enter into the overcharge prevention mode when the actual power currently required by the hybrid vehicle meets the first overcharge prevention condition, and the actual state of the power battery meets the second overcharge prevention condition.

15. The apparatus according to claim 14, **characterized in that**, the mode controlling module comprises:

a first judging unit, configured to judge whether the actual power currently required by the hybrid vehicle is less than a first power threshold; and determine that the actual power currently required by the hybrid vehicle meets the first overcharge prevention condition when the actual power currently required by the hybrid vehicle is less than the first power threshold; and
a second judging unit, configured to judge whether the actual SOC value of the power battery is greater than a third SOC threshold, and/or judge whether charging power of the power battery is less than a second power threshold; and determine that the actual state of the power battery meets the second overcharge prevention condition when the actual SOC value of the power battery is greater than the third SOC threshold and/or the charging power of the power battery is less than the second power threshold.

16. The apparatus according to claim 14, **characterized in that**, the mode controlling module is further configured to:

exit the overcharge prevention mode if, while in the overcharge prevention mode if the actual power currently required by the hybrid vehicle does not meet the first overcharge prevention condition, or the actual state of the power battery does not meet the second overcharge prevention condition.

17. A computer device, comprising:
a memory and a processor, wherein the memory and the processor are communicatively connected with each other, the memory stores computer instructions, and the processor executes the method for controlling the hybrid vehicle according to any one of claims 1-8 by executing the computer instructions.

18. A hybrid vehicle, comprising: the computer device according to claim 17.

19. A computer-readable storage medium, wherein the computer-readable storage medium stores computer instructions, and the computer instructions are configured to cause a computer to execute the method for controlling the hybrid vehicle according to any one of claims 1-8.

Determine an actual SOC value of a power battery when being in an overcharge prevention mode — S101

Determine a first target power corresponding to the actual SOC value — S102

Determine an actual power currently required by a hybrid vehicle and determine a second target power according to the actual power and the first target power — S103

Set an output power of a power component of the hybrid vehicle to the second target power — S104

FIG. 1

FIG. 2

Determine an actual SOC value of a power battery when being in an overcharge prevention mode — S301

Determine a first target power as a positive value when the actual SOC value is greater than a first SOC threshold — S3021

Determine the first target power as a negative value when the actual SOC value is less than a second SOC threshold — S3022

S302

Determine an actual power currently required by a hybrid vehicle and determine a second target power according to the actual power and the first target power — S303

Set an output power of a power component of the hybrid vehicle to the second target power — S304

FIG. 3

Judge whether an actual power currently required by a hybrid vehicle meets a first overcharge prevention condition, and judge whether an actual state of a power battery meets a second overcharge prevention condition — S401

Enter into an overcharge prevention mode when the actual power currently required by the hybrid vehicle meets the first overcharge prevention condition, and the actual state of the power battery meets the second overcharge prevention condition — S402

Determine an actual SOC value of a power battery when being in an overcharge prevention mode — S403

Determine a first target power corresponding to the actual SOC value — S404

Determine the actual power currently required by the hybrid vehicle and determine a second target power according to the actual power and the first target power — S405

Determine a target rotational speed and a target torque corresponding to the second target power — S4061

Control an engine of the hybrid vehicle to operate in a rotational speed control mode, and adjust a rotational speed of the engine by using the target rotational speed as an adjustment target of the engine — S4062

Control a generator motor of the hybrid vehicle to operate in a torque control mode, and adjust a torque of the generator motor by using the target torque as an adjustment target of the generator motor — S4063

FIG. 4

SOC value determining module — 501

First power determining module — 502

Second power determining module — 503

Controlling module — 504

FIG. 5

Processor — 10

Input apparatus — 30

Memory — 20

Output apparatus — 40

FIG. 6

## INTERNATIONAL SEARCH REPORT

| International application No. |
|---|
| **PCT/CN2024/075923** |

### A. CLASSIFICATION OF SUBJECT MATTER

B60W20/13(2016.01)i; B60W10/06(2006.01)i; B60W10/08(2006.01)i; B60W10/26(2006.01)i

According to International Patent Classification (IPC) or to both national classification and IPC

### B. FIELDS SEARCHED

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, WPABSC, VEN, DWPI, ENTXTC, CJFD: 混合, 混动, 过充, 电池, SOC, 实际功率, 实际需求功率, 目标功率, hybrid, battery, SOC, overcharg+, actual power, target power

### C. DOCUMENTS CONSIDERED TO BE RELEVANT

| Category* | Citation of document, with indication, where appropriate, of the relevant passages | Relevant to claim No. |
|---|---|---|
| Y | CN 108162968 A (ZHENGZHOU YUTONG BUS CO., LTD.) 15 June 2018 (2018-06-15) description, pages 3-8, and figures 1-2 | 1-2, 5, 9-10, 13, 17-19 |
| Y | WO 2023030392 A1 (BEIJING CHJ INFORMATION TECHNOLOGY CO., LTD.) 09 March 2023 (2023-03-09) description, specific embodiments, and figures 1-3 | 1-2, 5, 9-10, 13, 17-19 |
| A | CN 115366867 A (GREAT WALL MOTOR CO., LTD.) 22 November 2022 (2022-11-22) entire document | 1-19 |
| A | CN 110015211 A (ZHENGZHOU YUTONG BUS CO., LTD.) 16 July 2019 (2019-07-16) entire document | 1-19 |
| A | CN 116729350 A (CHINA FAW CO., LTD.) 12 September 2023 (2023-09-12) entire document | 1-19 |
| A | CN 117261625 A (BEIJING YIKONGZHIJIA TECHNOLOGY CO., LTD.) 22 December 2023 (2023-12-22) entire document | 1-19 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 July 2024** | **25 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/075923** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 20230000496 A (HYUNDAI MOTOR CO., LTD. et al.) 03 January 2023 (2023-01-03) entire document | 1-19 |

Form PCT/ISA/210 (second sheet) (July 2022)

**INTERNATIONAL SEARCH REPORT**
Information on patent family members

International application No.

**PCT/CN2024/075923**

| Patent document cited in search report | | | Publication date (day/month/year) | Patent family member(s) | | | Publication date (day/month/year) |
|---|---|---|---|---|---|---|---|
| CN | 108162968 | A | 15 June 2018 | WO | 2018103604 | A1 | 14 June 2018 |
| WO | 2023030392 | A1 | 09 March 2023 | CN | 115447558 | A | 09 December 2022 |
| CN | 115366867 | A | 22 November 2022 | | None | | |
| CN | 110015211 | A | 16 July 2019 | | None | | |
| CN | 116729350 | A | 12 September 2023 | | None | | |
| CN | 117261625 | A | 22 December 2023 | | None | | |
| KR | 20230000496 | A | 03 January 2023 | | None | | |

Form PCT/ISA/210 (patent family annex) (July 2022)